# EUROPÄISCHE PATENTANMELDUNG

(11) **EP 3 142 060 A1**
(43) Veröffentlichungstag der Anmeldung: **15.03.2017**
(21) Anmeldenummer: 15184412.3
(22) Anmeldetag: 09.09.2015
(51) Int. Cl.: G06Q 30/02, G06Q 30/06

(54) **SYSTEM ZUR DURCHFÜHRUNG VON SPENDENTÄTIGKEITEN**

(71) Anmelder: Treffer, Thomas, 8020 Graz (AT)
(72) Erfinder: Treffer, Thomas, 8020 Graz (AT)
(74) Vertreter: Wirnsberger, Gernot

(57) **Zusammenfassung**

Die Erfindung betrifft ein System zur Durchführung von Spendentätigkeiten. Um Spendentätigkeiten ohne Zeitversatz durchführen zu können, ist erfindungsgemäß vorgesehen, dass ein Sendegerät (1) und ein über eine Datenverbindung (11) mit dem Sendegerät (1) verbundenes Empfängergerät (2) vorgesehen sind, wobei das Empfängergerät (2) eine Produkteingabeeinrichtung aufweist, sodass Daten betreffend ein Produkt eingegeben und an das Sendegerät (1) übermittelt werden können, und das Sendegerät (1) zur Darstellung des Produktes sowie zur Freigabe bzw. Durchführung einer Zahlung eingerichtet ist, wobei das System derart eingerichtet ist, dass eine Freigabe bzw. Durchführung einer Zahlung mittels des Sendegerätes (1) ein Freigeben des Produktes durch das Empfängergerät (2) bewirkt.

## Beschreibung

Die Erfindung betrifft ein System zur Durchführung von Spendentätigkeiten.

Aus dem Stand der Technik sind verschiedene Systeme zur Durchführung von Spendentätigkeiten bekannt geworden. Beispielsweise ist es aus dem Stand der Technik bekannt, dass Bedürftige ihre Wünsche in einem sozialen Netzwerk bekannt geben, sodass Personen, welche bereit sind, einen Geldbetrag zu spenden, aus verschiedenen beispielsweise auf einer Internetseite publizierten Wünschen einen oder mehrere auswählen und dem oder den jeweiligen Bedürftigen einen gewünschten Betrag oder ein gewünschtes Produkt zukommen lassen können. Dadurch wird verglichen mit einem Einsammeln und Verteilen von Spenden durch Wohltätigkeitsorganisationen eine höhere Effizienz insbesondere über große Distanzen erreicht, weil Personalkosten bei einem Einsammeln in einem Land und Verteilen von Spendengeldern in einem anderen Land entfallen.

Nachteilig dabei ist, dass zwischen einer Aufgabe eines Wunsches auf Seiten des Bedürftigen beispielsweise in einem Staat der sogenannten Dritten Welt und der Durchführung einer Zahlung auf Seiten des Spendenden in einem Staat der sogenannten Ersten Welt ein vergleichsweise langer Zeitraum liegt, sodass nicht gewährleistet werden kann, dass der jeweilige Bedarf auf Seiten des Bedürftigen noch besteht, wenn eine wohltätige Person sich dazu entschließt, dem Bedürftigen ein gewünschtes Produkt zukommen zu lassen. Doch selbst dann, wenn der Bedarf auf Seiten des Bedürftigen bei Durchführung der Zahlung noch besteht, vergeht abermals ein gegebenenfalls langer Zeitraum, bis die Person, welche die Zahlung durchgeführt hat, davon erfährt und einen Dank entgegennehmen kann. Dadurch ergibt sich eine geringe Bereitschaft, zugunsten von an einem entfernten Ort lebenden Bedürftigen zu spenden.

Hier setzt die Erfindung an. Aufgabe der Erfindung ist es, ein System anzugeben, mit welchem Spendentätigkeiten über weite Distanzen ohne Zeitversatz durchgeführt werden können, sodass ein Bedürftiger ein gewünschtes Produkt unmittelbar erhalten kann.

Diese Aufgabe wird durch ein System der eingangs genannten Art gelöst, bei welchem ein Sendegerät und ein über eine Datenverbindung mit dem Sendegerät verbundenes Empfängergerät vorgesehen sind, wobei das Empfängergerät eine Produkteingabeeinrichtung aufweist, sodass Daten betreffend ein Produkt eingegeben und an das Sendegerät übermittelt werden können, und das Sendegerät zur Darstellung des Produktes sowie zur Freigabe bzw. Durchführung einer Zahlung eingerichtet ist, wobei das System derart eingerichtet ist, dass eine Freigabe bzw. Durchführung einer Zahlung mittels des Sendegerätes ein Freigeben des Produktes durch das Empfängergerät bewirkt.

Dadurch ist eine Durchführung von Spendentätigkeiten in Echtzeit möglich, indem ein Bedürftiger am Empfängergerät, welches sich beispielsweise in einem Supermarkt in Rumänien befinden kann, ein gewünschtes Produkt wie ein Nahrungsmittel auswählt, welches am Sendegerät, welches sich beispielsweise in Österreich befinden kann, als aktueller Bedarf dargestellt wird. Eine Person, welche gewillt ist, einen Bedürftigen zu unterstützen, kann dann mittels des Sendegerätes eine Zahlung freigeben oder durchführen. Die Freigabe bzw. Durchführung der Zahlung wird unmittelbar danach über die Datenverbindung, beispielsweise eine Internetverbindung, an das Empfängergerät übertragen, wo das entsprechende Produkt freigegeben wird. Dadurch wird gewährleistet, dass ein Bedarf eines Bedürftigen unmittelbar dann gedeckt werden kann, wenn der Bedarf auftritt, sodass ein Risiko vermieden wird, dass der Bedarf bereits gedeckt wurde. Gleichzeitig kann dem Spendenden unmittelbar gedankt und vermittelt werden, dass die Spende bereits eine Wirkung erzielt hat. Über eine derartige unmittelbare Wirkung wird eine Bereitschaft, Spenden durchzuführen, wesentlich erhöht.

Üblicherweise sind das Sendegerät und das Empfängergerät mit jeweils einem Bildschirm zur Darstellung des Produktes, einer Datenverarbeitungsanlage wie einem Computer und einem Modem zur Herstellung einer Datenverbindung ausgebildet. Die Produkteingabeeinrichtung kann beispielsweise als Tastatur, Barcodescanner, Touchscreen oder dergleichen ausgebildet sein.

Es hat sich bewährt, dass das Empfängergerät ein Gehäuse aufweist, in welchem Produkte, insbesondere Nahrungsmittel, vor einer freien Entnahme geschützt lagerbar sind, wobei das Empfängergerät zur physischen Freigabe der Produkte eingerichtet ist, sodass ein oder mehrere Produkte nach einer Freigabe manuell entnommen werden können. Dadurch kann das Entnahmegerät zur Selbstbedienung ausgebildet sein, sodass Bedürftige Produkte auch außerhalb von Geschäftslokalen sowie unabhängig von Öffnungszeiten erhalten können, wenn entsprechende Spenden durchgeführt werden. Beispielsweise kann das Empfängergerät einen Getränkeautomat oder Nahrungsmittelautomat oder dergleichen aufweisen, welcher mit einer Datenverarbeitungsanlage wie einem Computer verbunden ist, sodass nach Bestätigung einer Freigabe bzw. Durchführung einer Zahlung mittels des Sendegerätes automatisiert ein Getränk oder Nahrungsmittel freigegeben wird. Das Getränk oder Nahrungsmittel kann beispielsweise nach Freigabe wie bei Getränkeautomaten üblich in eine Entnahmeöffnung fallen, aus welcher das jeweilige Produkt dann durch den Bedürftigen einfach manuell entnommen werden kann.

Günstig ist es, wenn das Empfängergerät eine Heizeinrichtung und/oder eine Kühleinrichtung zur Regelung einer Temperatur in einem Inneren des Gehäuses aufweist. Dadurch können im Empfängergerät befindliche Produkte wie Nahrungsmittel, Getränke oder Arzneimittel auf einfache Weise auf einer definierten Temperatur gehalten und ein vorzeitiges Verderben verhindert werden.

Mit Vorteil ist vorgesehen, dass das Empfängergerät eine Bilderfassungseinrichtung, insbesondere eine Digitalkamera, aufweist und das System zur Darstellung eines von der Bilderfassungseinrichtung erfassten Bildes am Sendegerät eingerichtet ist. Dadurch ist es möglich, dass ein potenzieller Spender am Sendegerät nicht nur ein gewünschtes Produkt sieht, sondern dem Spender auch ein Bild des Bedürftigen dargestellt werden kann, welcher zur selben Zeit am Empfängergerät um ein jeweiliges Produkt bittet. Des Weiteren kann dann auch ein Dank des Bedürftigen nach Erhalt des Produktes unmittelbar visuell an den Spender übermittelt werden. Selbstverständlich kann das System ergänzend auch zur Übermittlung akustischer Botschaften zwischen Sendegerät und Empfängergerät bzw. zwischen Bedürftigem und Spender ausgebildet sein, beispielsweise mit jeweils zumindest einem Mikrofon und einem Lautsprecher, welche mit dem Computer und der Datenverbindung bzw. dem Modem verbunden sind. Dadurch wird eine besonders hohe Bereitschaft zur Durchführung von Spendentätigkeiten erreicht. Ferner kann auch am Sendegerät eine Digitalkamera angeordnet sein, sodass zwischen Sendegerät und Empfängergerät audiovisuelle Botschaften wie bei einem Videotelefonat ausgetauscht werden können.

Es hat sich als günstig erwiesen, dass das System derart eingerichtet ist, dass am Empfängergerät zur Freigabe des Produktes ein Signal, insbesondere ein visuelles Signal, abgegeben wird, wenn mittels des Sendegerätes eine Zahlung durchgeführt bzw. freigegeben wurde. Ein derart ausgebildetes Empfängergerät kann beispielsweise in einem Geschäftslokal wie einem Supermarkt oder einer Apotheke in einem Kassenbereich angeordnet sein, um einem Bedürftigen ein im jeweiligen Geschäftslokal gewünschtes Produkt zukommen zu lassen. Es kann dann beispielsweise ein Angestellter wie ein Verkäufer des Geschäftslokals Daten betreffend das Produkt in das Empfängergerät eingeben, insbesondere mittels eines Barcodescanners oder einer Tastatur, welche mit einem Bild des Bedürftigen an das Sendegerät übermittelt werden. Sobald am Sendegerät durch einen Spender die Zahlung freigegeben bzw. durchgeführt wird, wird ein Freigabesignal vom Sendegerät zum Empfängergerät, gegebenenfalls unter gleichzeitiger Bestätigung einer die Zahlung abwickelnden Bank, übermittelt, wonach am Sendegerät ein Signal zur Freigabe des Produktes abgegeben wird. Der Verkäufer erhält somit die Information, dass die Zahlung freigegeben bzw. durchgeführt wurde und kann dem Bedürftigen das Produkt aushändigen. Bei dieser Ausführungsform wird somit die physische Freigabe des Produktes durch das Empfängergerät mittels eines visuellen Signals ausgelöst. Die physische Freigabe des Produktes selbst erfolgt wie bei einem herkömmlichen Kauf durch direkte Übergabe vom Verkäufer an den Bedürftigen im Geschäftslokal.

Es hat sich bewährt, dass das Empfängergerät zur gleichzeitigen Übermittlung einer visuellen Information an zwei Personen ausgebildet ist, welche sich an gegenüberliegenden Seiten des Empfängergerätes befinden. Dadurch kann einem möglichen Betrug auf einfache Weise vorgebeugt werden, wenn sowohl die bedürftige Person als auch ein Mitarbeiter des Geschäftslokals gleichzeitig auf gegenüberliegenden Seiten des Empfängergerätes, welches in der Regel auf einer Ladentheke oder dergleichen positioniert ist, dasselbe Produkt sehen, welches auch am Sendegerät dargestellt wird. Andernfalls bestünde ein Risiko, dass der Mitarbeiter des Geschäftslokals ein teureres Produkt als der Bedürftige auswählt und somit eine Zahlung über das Sendegerät bewirkt wird, welche nicht dem Wert des dem Bedürftigen übergebenen Produktes entspricht. Der Spender kann somit darauf vertrauen, dass die Spende gänzlich den tatsächlich Bedürftigen erreicht.

Zur Darstellung der visuellen Information an zwei an gegenüberliegenden Seiten des Empfängergerätes befindlichen Personen ist es günstig, wenn am Empfängergerät zwei an gegenüberliegenden Seiten angeordnete Bildschirme vorgesehen sind. Mit Vorteil sind die Bildschirme zur gleichzeitigen Darstellung desselben Inhaltes eingerichtet und jeweils als Touchscreen ausgebildet, sodass Daten über diese Bildschirme eingegeben werden können.

Ein Missbrauch des Systems kann auf einfache Weise vermieden werden, wenn am Empfängergerät eine Identifikationseinrichtung, insbesondere eine Chipkartenleseeinrichtung, vorgesehen ist. Dadurch können tatsächlich bedürftige Personen auf einfache Weise identifiziert werden, sodass der Spender ausschließen kann, dass seine Spende Personen erreicht, welche nicht bedürftig sind. Beispielsweise kann tatsächlich bedürftigen Personen, welche über ein Einkommen unterhalb eines bestimmten Grenzwertes verfügen, eine Chipkarte ausgehändigt werden, mit welcher sich die bedürftige Person beim Empfängergerät identifizieren kann. Alternativ oder ergänzend können natürlich auch andere aus dem Stand der Technik bekannte Möglichkeiten zur Identifikation eingesetzt werden, beispielsweise biometrische Verfahren wie Identifikation anhand eines Fingerabdrucks oder dergleichen. Alternativ oder ergänzend kann als Identifikationseinrichtung auch ein Barcodescanner vorgesehen sein. In dem Fall werden tatsächlich Bedürftige mit Gegenständen ausgestattet, welche einen zur Benutzung des Systems berechtigenden Barcode aufweisen. Die Gegenstände können beispielsweise aus Papier oder Kunststoff bestehende Karten sein, welche wesentlich günstiger herstellbar sind als Chipkarten. Dadurch kann das System auf besonders kostengünstige Weise umgesetzt werden.

Um Zahlungen auf besonders einfache Weise durchführen zu können, ist es günstig, wenn das Sendegerät eine Leseeinrichtung für ein bargeldloses Zahlungsmittel aufweist. Beispielsweise kann im Sendegerät eine Leseeinrichtung für eine Kreditkarte, eine Debitkarte oder dergleichen vorgesehen sein.

Bevorzugt ist vorgesehen, dass das Sendegerät zur Durchführung von Zahlungen mittels Bargeld eine Einrichtung zur Aufnahme und Analyse von Bargeld aufweist. Das Sendegerät kann somit zur Aufnahme von Papiergeld und/oder von Münzen ausgebildet sein. Eine Zahlung kann dann durchgeführt werden, indem Banknoten und/oder Münzen in das Sendegerät eingeführt werden, wonach ein Geldbetrag ermittelt wird, welcher den eingeführten Banknoten und/oder Münzen entspricht. Eine Übermittlung der Zahlung vom Sendegerät zum Empfängergerät kann auf verschiedenste aus dem Stand der Technik bekannte Weisen erfolgen. Beispielsweise kann ein am Sendegerät einbezahlter Betrag auf ein Konto überwiesen werden, von welchem der Betrag auf ein Konto des Geschäftslokals überwiesen wird, in welchem der Bedürftige um ein entsprechendes Produkt bittet. Derartige Verfahren sind aus dem bargeldlosen Zahlungsverkehr bekannt. Alternativ kann ein Geldbetrag selbstverständlich auch mittels Boten direkt übermittelt werden, um auch Bedürftige in Regionen unterstützen zu können, in welchen kein funktionierendes Bankensystem besteht.

Es hat sich bewährt, dass das Sendegerät einen Bildschirm zur Darstellung des Produktes sowie zumindest einen Werbebildschirm zur Darstellung eines von einem Inhalt des Bildschirmes unabhängigen Inhaltes aufweist, welcher vorzugsweise an einem oberen Ende des Sendegerätes oder an einer Seitenfläche des Sendegerätes angeordnet ist. Dadurch kann das Sendegerät auch zur Übermittlung von Werbebotschaften eingesetzt werden. Das Sendegerät kann dann beispielsweise an stark frequentierten Orten wie Einkaufszentren platziert werden, um einerseits Passanten zu Spendentätigkeiten anzuregen und andererseits gleichzeitig Werbebotschaften zu übermitteln.

Günstig ist es, wenn das Sendegerät und/oder das Empfängergerät einen Touchscreen zur Eingabe von Daten aufweisen. Dadurch kann beispielsweise am Empfängergerät ein gewünschtes Produkt ausgewählt und an das Sendegerät übermittelt werden, sodass der Touchscreen die Produkteingabeeinrichtung bildet. Am Sendegerät können mittels eines Touchscreens beispielsweise eine Zahlung über ein Bankkonto freigegeben oder schriftliche Botschaften an das Empfängergerät übermittelt werden. Es versteht sich, dass jeder Bildschirm als Touchscreen ausgebildet sein kann. Das Sendegerät kann auch wie ein herkömmlicher Computer mit einer Internetverbindung, einer Tastatur und dergleichen zur Freigabe einer Zahlung beispielsweise von einem Online-Konto einer Bank ausgebildet sein.

Bevorzugt weist das Empfängergerät an zumindest einer Seitenfläche einen Werbebildschirm auf. Dadurch kann auch das Empfängergerät auf einfache Weise zusätzlich für Werbebotschaften eingesetzt werden. Der Werbebildschirm kann wie ein normaler Bildschirm ausgebildet sein.

Es versteht sich, dass auch ein oder mehrere Bildschirme am Empfängergerät, welche zur Darstellung eines Produktes an einer Vorderseite und/oder einer Rückseite des Empfängergerätes angeordnet sind, zur Darstellung von Werbebotschaften und dergleichen in einem Geschäftslokal eingesetzt werden können. Dadurch können diese Bildschirme, welche gegebenenfalls als Touchscreens ausgebildet sind, auch dann genutzt werden, wenn das Empfängergerät gerade nicht von einem Bedürftigen benutzt wird.

Mit Vorteil sind mehrere Sendegeräte und Empfängergeräte und eine Datenverarbeitungsanlage vorgesehen, welche über eine Datenverbindung verbunden sind. Somit können Sendegeräte an unterschiedlichen Orten positioniert werden, um verschiedenste potentielle Spender zu erreichen. Gleichzeitig können verschiedene Empfängergeräte an unterschiedlichen Geschäftslokalen angeordnet oder als Selbstbedingungsgeräte ausgebildet und beispielsweise an Bahnhöfen positioniert sein. Durch eine höhere Anzahl von Sendegeräten und Empfängergeräten wird eine Wahrscheinlichkeit erhöht, dass ein Bedürftiger und ein potentieller Spender zur selben Zeit über das System in Verbindung treten und eine Spendentätigkeit durchgeführt werden kann.

Weitere Merkmale, Vorteile und Wirkungen der Erfindung ergeben sich anhand der nachfolgend dargestellten Ausführungsbeispiele. In den Zeichnungen, auf welche dabei Bezug genommen wird, zeigen:
Fig. 1 ein erfindungsgemäßes System;
Fig. 2 ein Sendegerät eines erfindungsgemäßen Systems;
Fig. 3 eine erste Ausführungsform eines Empfängergerätes eines erfindungsgemäßen Systems;
Fig. 4 eine zweite Ausführungsform eines Empfängergerätes eines erfindungsgemäßen Systems.

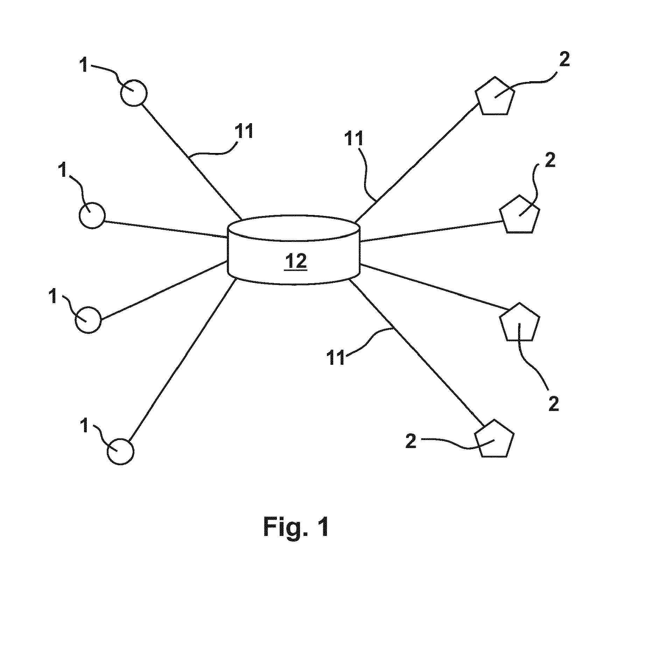

Fig. 1 zeigt schematisch ein erfindungsgemäßes System, welches über Datenverbindungen 11 verbundene Sendegeräte 1 und Empfängergeräte 2 aufweist. Die Sendegeräte 1 sind jeweils zur Freigabe bzw. Durchführung von Zahlungen und die Empfängergeräte 2 jeweils zur Freigabe von Produkten ausgebildet, um eine Verbindung zwischen einem Bedürftigen und einem Spender herzustellen und Spenden unmittelbar und ohne Zeitversatz durchführen zu können. Des Weiteren ist eine Datenverarbeitungsanlage 12 wie ein Computer vorgesehen, welche ebenfalls über Datenverbindungen 11 mit den Sendegeräten 1 und Empfängergeräten 2 verbunden ist. Mittels der Datenverarbeitungsanlage 12 können von den Sendegeräten 1 freigegebenen bzw. durchgeführte Zahlungen verwaltet und beispielsweise an Inhaber von Geschäftslokalen weitergeleitet werden, in welchen die Empfängergeräte 2 zur Freigabe von Produkten angeordnet sind. Des Weiteren kann die Datenverarbeitungsanlage 12 auch zur zentralen Herstellung einer Verbindung zwischen einem oder mehreren Sendegeräten 1 und Empfängergeräten 2 genutzt werden, um einen Kontakt zwischen einem an einem Sendegerät 1 beispielsweise in Westeuropa befindlichen Spender und einem an einem Empfängergerät 2 beispielsweise in Osteuropa befindlichen Bedürftigen herzustellen.

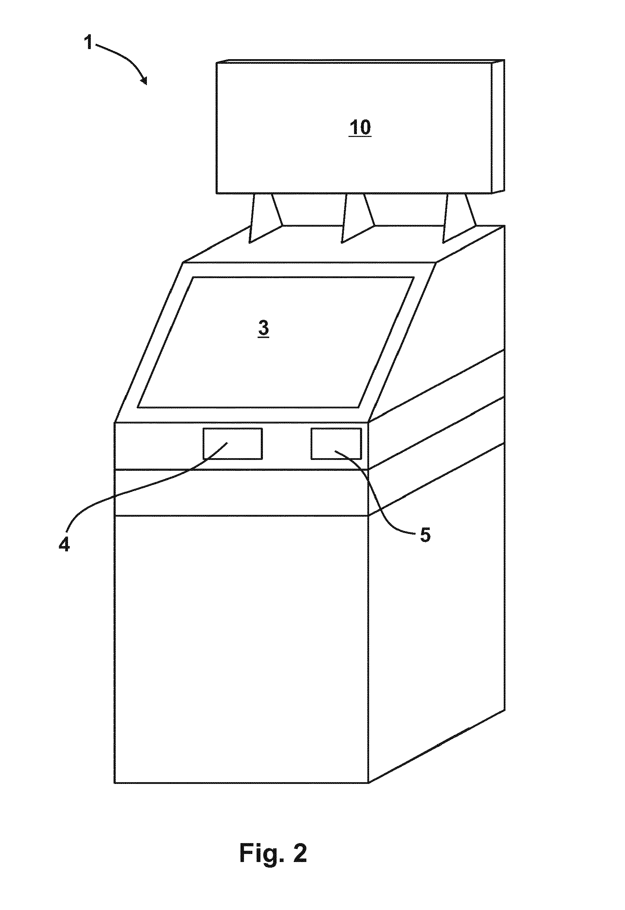

Fig. 2 zeigt ein Sendegerät 1 eines erfindungsgemäßen Systems. Wie dargestellt weist das Sendegerät 1 in einem unteren Bereich einen Bildschirm 3 auf, auf welchem ein von einem Bedürftigen an einem Empfängergerät 2 gewähltes bzw. gewünschtes Produkt sowie ein Bild des Bedürftigen dargestellt werden können. Des Weiteren sind Einrichtungen zur Durchführung von Zahlungen vorgesehen. Am dargestellten Sendegerät 1 sind eine Bargeldaufnahmeeinrichtung 4 zur Aufnahme und Analyse von Bargeld sowie eine Leseeinrichtung 5 für ein bargeldloses Zahlungsmittel angeordnet, sodass mit dem Sendegerät 1 sowohl bargeldlose als auch bargeldgebundene Zahlungen durchgeführt werden können.

Ferner ist an einem oberen Ende des Sendegerätes 1 ein Werbebildschirm 10 positioniert, über welchen Werbebotschaften übermittelt werden können. Selbstverständlich kann auch an einer Rückseite dieses Werbebildschirmes 10 ein weiterer Werbebildschirm 10 angeordnet sein, um Werbebotschaften in unterschiedliche Richtungen zu übermitteln.

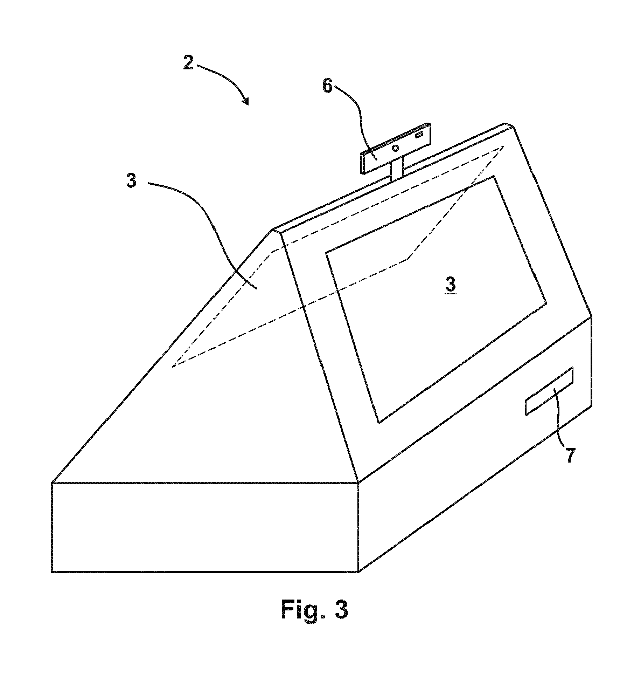

Fig. 3 zeigt eine Ausführung eines Empfängergerätes 2 eines erfindungsgemäßen Systems, welches für einen Einsatz in einem Geschäftslokal ausgebildet ist. Das Empfängergerät 2 weist zwei an gegenüberliegenden Seiten angeordnete Bildschirme 3 auf und ist zur gleichzeitigen Darstellung desselben Inhaltes bzw. Produktes an beiden Bildschirmen 3 ausgebildet, sodass ein Bedürftiger und ein Mitarbeiter des Geschäftslokals dasselbe Produkt sehen können. Dadurch wird ein Betrug auf einfache Weise vermieden. Weiter ist eine Digitalkamera 6 bzw. eine Webcam am Empfängergerät 2 angeordnet, sodass ein Bild des Bedürftigen erfasst und an das Sendegerät 1 übermittelt werden kann.

An einer Seitenfläche des Empfängergerätes 2 können ein oder mehrere zusätzliche Bildschirme 3 oder Werbebildschirme 10 positioniert sein, um Werbebotschaften an im Geschäftslokal befindliche Personen zu übermitteln. Des Weiteren ist beim dargestellten Empfängergerät 2 eine Identifikationseinrichtung vorgesehen, um einen Bedürftigen zu identifizieren. Die Identifikationseinrichtung kann beispielsweise als Chipkartenleseeinrichtung 7 ausgebildet und der Bedürftige mit einer Chipkarte ausgestattet sein. Dadurch wird auf einfache Weise vermieden, dass Personen um Spenden bitten, welche nicht bedürftig sind, indem nur tatsächlich Bedürftigen Zugang zu entsprechenden Chipkarten gewährt wird.

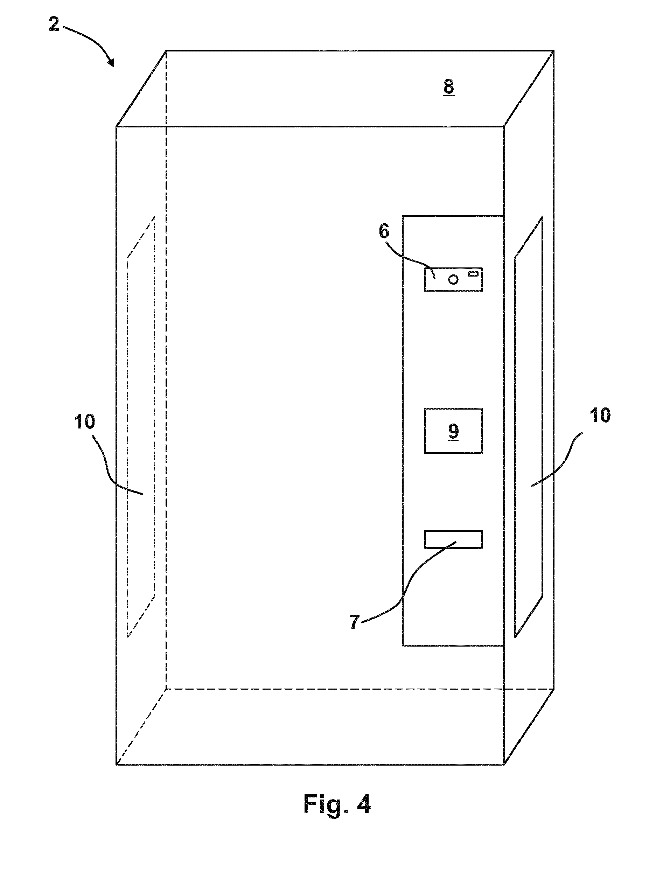

Fig. 4 zeigt eine weitere Ausführungsform eines Empfängergerätes 2 für ein erfindungsgemäßes System. Das dargestellte Empfängergerät 2 ist ähnlich einem Nahrungsmittelautomaten bzw. einem Getränkeautomaten ausgebildet und weist zusätzlich eine Kamera zur Erfassung eines Bildes des Bedürftigen, einen Touchscreen 9, zur Auswahl eines gewünschten Produktes sowie eine Chipkartenleseeinrichtung 7 zur Identifikation eines Bedürftigen auf. In einem Inneren eines Gehäuses 8 des Empfängergerätes 2 sind die zu wählenden Produkte angeordnet, beispielsweise Nahrungsmittel. Nach Durchführung bzw. Freigabe einer Zahlung am Sendegerät 1 wird das jeweilige Produkt vom Empfängergerät 2 freigegeben und fällt beispielsweise in eine nicht dargestellte Entnahmeöffnung, aus welcher der Bedürftige es entnehmen kann. Auch bei dieser Ausführungsform sind zusätzliche Werbebildschirme 10 für Werbezwecke angeordnet, welche wie dargestellt an Seitenflächen positioniert sind.

Mit einem erfindungsgemäßen System können Spendentätigkeiten unmittelbar und besonders effizient durchgeführt werden. Weil dabei ein direkter Kontakt zwischen einem Spender und einem Bedürftigen hergestellt wird, wird eine Bereitschaft zu Spendentätigkeiten erhöht. Ein Missbrauch des Systems wird auf einfache Weise durch Chipkarten sowie eine Chipkartenleseeinrichtung 7 in den Empfängergeräten 2 verhindert, indem entsprechende Chipkarten nur an tatsächlich Bedürftige ausgegeben werden. Sendegerät 1 sowie Empfängergerät 2 verfügen jeweils über Möglichkeiten zur Herstellung einer Datenverbindung 11, beispielsweise mittels eines Modems zur Herstellung einer Internetverbindung, sodass Spendentätigkeiten über weite Distanzen durchgeführt werden können. Beispielsweise kann ein Empfängergerät 2 in einer Apotheke in Rumänien positioniert sein, während das Sendegerät 1 in einem Einkaufszentrum in Österreich angeordnet sein kann.

## Patentansprüche

1. System zur Durchführung von Spendentätigkeiten, **dadurch gekennzeichnet, dass** ein Sendegerät (1) und ein über eine Datenverbindung (11) mit dem Sendegerät (1) verbundenes Empfängergerät (2) vorgesehen sind, wobei das Empfängergerät (2) eine Produkteingabeeinrichtung aufweist, sodass Daten betreffend ein Produkt eingegeben und an das Sendegerät (1) übermittelt werden können, und das Sendegerät (1) zur Darstellung des Produktes sowie zur Freigabe bzw. Durchführung einer Zahlung eingerichtet ist, wobei das System derart eingerichtet ist, dass eine Freigabe bzw. Durchführung einer Zahlung mittels des Sendegerätes (1) ein Freigeben des Produktes durch das Empfängergerät (2) bewirkt.

2. System nach Anspruch 1, **dadurch gekennzeichnet, dass** das Empfängergerät (2) ein Gehäuse (8) aufweist, in welchem Produkte, insbesondere Nahrungsmittel, vor einer freien Entnahme geschützt lagerbar sind, wobei das Empfängergerät (2) zur physischen Freigabe der Produkte eingerichtet ist, sodass ein oder mehrere Produkte nach einer Freigabe manuell entnommen werden können.

3. System nach Anspruch 2, **dadurch gekennzeichnet, dass** das Empfängergerät (2) eine Heizeinrichtung und/oder eine Kühleinrichtung zur Regelung einer Temperatur in einem Inneren des Gehäuses (8) aufweist.

4. System nach Anspruch 1 oder 3, **dadurch gekennzeichnet, dass** das Empfängergerät (2) eine Bilderfassungseinrichtung, insbesondere eine Digitalkamera (6), aufweist und das System zur Darstellung eines von der Bilderfassungseinrichtung erfassten Bildes am Sendegerät (1) eingerichtet ist.

5. System nach einem der Ansprüche 1 bis 4, **dadurch gekennzeichnet, dass** das System derart eingerichtet ist, dass am Empfängergerät (2) zur Freigabe des Produktes ein Signal, insbesondere ein visuelles Signal, abgegeben wird, wenn mittels des Sendegerätes (1) eine Zahlung durchgeführt bzw. freigegeben wurde.

6. System nach einem der Ansprüche 1 bis 5, **dadurch gekennzeichnet, dass** das Empfängergerät (2) zur gleichzeitigen Übermittlung einer visuellen Information an zwei Personen ausgebildet ist, welche sich an gegenüberliegenden Seiten des Empfängergerätes (2) befinden.

7. System nach Anspruch 6, **dadurch gekennzeichnet, dass** am Empfängergerät (2) zwei an gegenüberliegenden Seiten angeordnete Bildschirme (3) vorgesehen sind.

8. System nach einem der Ansprüche 1 bis 7, **dadurch gekennzeichnet, dass** am Empfängergerät (2) eine Identifikationseinrichtung, insbesondere eine Chipkartenleseeinrichtung (7) vorgesehen ist.

9. System nach einem der Ansprüche 1 bis 8, **dadurch gekennzeichnet, dass** das Sendegerät (1) eine Leseeinrichtung (5) für ein bargeldloses Zahlungsmittel aufweist.

10. System nach einem der Ansprüche 1 bis 9, **dadurch gekennzeichnet, dass** das Sendegerät (1) zur Durchführung von Zahlungen mittels Bargeld eine Einrichtung zur Aufnahme und Analyse von Bargeld aufweist.

11. System nach einem der Ansprüche 1 bis 10, **dadurch gekennzeichnet, dass** das Sendegerät (1) einen Bildschirm (3) zur Darstellung des Produktes sowie zumindest einen Werbebildschirm (10) zur Darstellung eines von einem Inhalt des Bildschirmes (3) unabhängigen Inhaltes aufweist, welcher vorzugsweise an einem oberen Ende des Sendegerätes (1) oder an einer Seitenfläche des Sendegerätes (1) angeordnet ist.

12. System nach einem der Ansprüche 1 bis 11, **dadurch gekennzeichnet, dass** das Sendegerät (1) und/oder das Empfängergerät (2) einen Touchscreen (9) zur Eingabe von Daten aufweist.

13. System nach einem der Ansprüche 1 bis 12, **dadurch gekennzeichnet, dass** das Empfängergerät (2) an zumindest einer Seitenfläche einen Werbebildschirm (10) aufweist.

14. System nach einem der Ansprüche 1 bis 13, **dadurch gekennzeichnet, dass** mehrere Sendegeräte (1) und Empfängergeräte (2) und eine
Datenverarbeitungsanlage (12) vorgesehen sind, welche über eine Datenverbindung (11) verbunden sind.
